(19) Europäisches Patentamt / European Patent Office / Office européen des brevets

(11) **EP 4 778 745 A2**

(12) **EUROPEAN PATENT APPLICATION**

(43) Date of publication:
22.07.2026 Bulletin 2026/30

(21) Application number: 26163152.7

(22) Date of filing: 09.01.2023

(51) International Patent Classification (IPC):
**B60G 17/06** (2006.01)

(52) Cooperative Patent Classification (CPC):
**B60G 17/0165; B60W 30/025; B60W 40/06;**
B60G 17/018; B60G 2400/102; B60G 2400/204;
B60G 2400/252; B60G 2400/82; B60G 2400/821;
B60G 2400/823; B60G 2400/824; B60G 2400/91;
B60G 2600/02; B60G 2600/181; B60G 2600/182;
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: 10.01.2022 US 202263297873 P

(62) Document number(s) of the earlier application(s) in
accordance with Art. 76 EPC:
**23737657.9 / 4 463 331**

(71) Applicant: **ClearMotion, Inc.**
**Billerica, MA 01821 (US)**

(72) Inventors:
• **JIANG, Yu**
**Wellesley, MA, 02481 (US)**
• **GIOVANARDI, Marco**
**Melrose, MA, 02176 (US)**

(74) Representative: **Hoffmann Eitle**
**Patent- und Rechtsanwälte PartmbB**
**Arabellastraße 30**
**81925 München (DE)**

Remarks:
•This application was filed on 09-03-2026 as a
divisional application to the application mentioned
under INID code 62.
•Claims filed after the date of receipt of the
application (Rule 68(4) EPC).

(54) **METHOD AND APPARATUS FOR OUTPUT SATURATION AVOIDANCE IN PREVIEW-BASED VEHICLE SYSTEM CONTROL**

(57) Methods related to the control of vehicle systems while a vehicle is traveling along a road surface are disclosed. In some implementations, data related to the road surface ahead of the vehicle is separated into first and second frequency ranges. Commands for a vehicle system may then be determined for the different frequency ranges and the vehicle system may be controlled based at least in part on the separate commands for the separate frequency ranges. This may include determining a combined system command based at least in part on the separate commands for the separate frequency ranges in some implementations.

EP 4 778 745 A2

(52) Cooperative Patent Classification (CPC): (Cont.)
B60G 2600/1871; B60G 2600/602;
B60G 2600/604; B60G 2600/702; B60G 2800/162;
B60G 2800/85; B60G 2800/9123; B60G 2800/916;
B60W 2552/20

**Description**

CROSS-REFERENCE TO RELATED APPLICATIONS

This application claims the benefit under 35 U.S.C. §119 of United State Provisional Application Serial No. 63/297,873, filed January 10, 2022, the entire contents of which is incorporated herein by reference.

FIELD

Disclosed embodiments are related to vehicular control based at least partially on information about a segment of a road ahead of a vehicle, while the vehicle is travelling along the road.

BACKGROUND

Systems on-board a vehicle may be operated based on preview or *a priori* information that defines a portion of a road ahead of a vehicle. Systems that may be operated in this way may include ADAS (Advanced Driver-Assistance System), active or semi-active suspension systems, braking systems, steering systems, propulsion systems etc.

SUMMARY

According to aspects of the disclosure, there is provided a method of operating a system onboard a vehicle while the vehicle is travelling along a road surface. The method may include receiving, at a microprocessor in the vehicle, road surface profile data associated with the road surface ahead of the vehicle; filtering the road surface profile data with a lower frequency band pass filter to produce a first filtered output, wherein the lower frequency band pass filter has a first lower frequency limit equal to a first frequency and a first upper frequency limit equal to a second frequency; supplying the first filtered output to a lower frequency transfer function to produce a lower frequency command signal; filtering the road surface profile data with a higher frequency band pass filter to produce a second filtered output, wherein the higher frequency band pass filter has second lower frequency limit equal to the second frequency and a second upper frequency limit equal to a third frequency, wherein the higher frequency band filter operates in parallel with the lower frequency band pass filter; supplying the second filtered output to a higher frequency transfer function to produce a higher frequency command signal; determining a total command signal based on the lower frequency command signal and the higher frequency command signal; and operating the system based at least partly on the total command signal.

In some embodiments, the first frequency may be greater than or equal to 0.3 Hz and less than or equal to 0.8 Hz. In some embodiments, the third frequency is in the range of greater than or equal to 8 Hz and less than or equal to 0.8 12 Hz. In some embodiments, the first frequency and the third are predetermined. In some embodiments, the data may be received by a microprocessor in the vehicle from a remote data base, a database in the cloud, a local database located in the vehicle. In some embodiments, the first lower frequency limit may be determined at the lower -3 dB point of the lower frequency band pass filter and the first upper frequency limit may be determined at the upper -3 dB point of the lower frequency band pass filter. In some embodiments, the second lower frequency limit may be determined at the lower -3 dB point of the higher frequency band pass filter and the second upper frequency limit may be determined at the upper -3 dB point of the higher frequency band pass filter. In some embodiments, the system may be an active suspension actuator which may be controlled by an active suspension controller. In some embodiments, the lower frequency command signal may cause a portion of the vehicle to track at least a first vertical motion of the road. In some embodiments, the higher frequency command signal may cause a portion of the vehicle to be isolated from at least a vertical motion of the road. In some embodiments, the total command signal may be determined by summing the lower frequency command signal and the higher frequency command signal. In some embodiments, the lower frequency command signal may be a first series of force commands. In some embodiments, the higher frequency command signal may be a second series of force commands. In some embodiments, the method may include determining the second frequency while the vehicle is travelling along the road surface. In some embodiments, the method may include operating a vertical motion planner to optimize a cost function associated with the active suspension actuator. In some embodiments, the optimizing the cost function may include minimizing the degree to which the total command signal includes commands that are beyond the ability of the active suspension actuator to produce or to implement. In some embodiments, the vertical motion planner may operate at a first a cycle time and the controller operates at a second faster cycle time. In some embodiments, the first cycle time of is in a range cycle times that is greater than or equal to 0.1 seconds to less than or equal to 1 second. In some embodiments, the second cycle time is in a range of cycle times that is greater than or equal to 0.0005 seconds to less than or equal to .02 seconds.

According to aspects of the disclosure, there is provided a method operating a vehicle while travelling along a road surface. The method may include: operating a vehicle system according to a first motion plan, after the start of a first period of a given duration, with a controller that includes a microprocessor operating at a first cycle time, where the motion plan is prepared, prior to the start of the first period, with a motion planner microprocessor operating at a second cycle time; collecting data associated with a motion of the vehicle during the first period with at least one sensor onboard the vehicle; and prior to an end of the first period, operating the vehicle system with the controller, according to a second motion plan; wherein the value of at least one vehicle system parameter during the transition from the first plan to the second plan is determined, at least partially, based on the data collected during the period.

In some embodiments, the first cycle time may be in a range of greater than equal to 50 Hz to less than or equal to 2000 Hz. In some embodiments, the second cycle time may be in a range of greater than equal to 2 Hz to less than or equal to 20 Hz. In some embodiments, the vehicle system may be an active suspension system. In some embodiments, the motion plan may be a vertical motion plan that is at least partially based on a road profile of a segment of the road that may be ahead of the vehicle prior to the start of the first period. In some embodiments, the first vertical motion plan may include a first plan for vehicle motion in a first range of frequencies above a first frequency and a second plan for vehicle motion in a second range of frequencies below the first frequency. In some embodiments, the first frequency may be determined by the motion planner based at least partially on a road profile of the segment of the road that is ahead of the vehicle prior to the start of the first period. In some embodiments, the information about the road profile of the segment of the road is received at the vehicle from a database in the cloud.

According to aspects of the disclosure, there is provided a method of operating a vehicle while travelling along a road surface where the vehicle includes a vertical motion planner and a vertical motion controller. The method may include: receiving, at the vertical motion planner, road surface profile data for a road segment ahead of the vehicle; using the vertical motion planner to develop a first vertical force profile for at least one actuator of an active suspension system, based on the road surface profile and for a range of frequencies above a first frequency, wherein the first vertical force profile is configured to isolate at least a portion of the vehicle from road surface disturbances, while the vehicle is traveling along the road segment; using the vertical motion planner to develop a second vertical force profile for the at least one actuator of the active suspension system, based on the road surface profile and for a range of frequencies below the first frequency, wherein the second vertical force profile is configured to cause the motion of at least the portion of the vehicle to track the road surface profile, while the vehicle is traveling along the road segment; providing an overall force profile to the controller, wherein the overall force profile is a combination of the first force profile and the second force profile; and operating the at least one actuator to apply a force on at least the portion of the vehicle according to the overall force profile while the vehicle is traveling along the road segment.

In some embodiments, the first force profile and/or the second force profile are at least partially based on a state parameter of the vehicle. In some embodiments, the method may include minimizing a cost function associated with the actuator by modifying the first frequency. In some embodiments, the cost function may be based on the amount or the degree of force saturation, the amount or degree range of travel saturation, and/or the value of the first frequency.

According to aspects of the disclosure, there is provided a controller system of an actuator of an active suspension system. The controller system may include: a microprocessor-based vertical motion planner configured to develop a first optimal motion plan for a vehicle for frequencies in a range below a first frequency and a second optimal motion plan, different than the first optimal motion plan, for frequencies above the first frequency, wherein the first and second optimal motion plan are at least partially based on a road motion profile for a segment of the road ahead of the vehicle; and, a microprocessor-based controller, wherein the controller is configured to control a vertical motion of a vehicle with an active suspension controller based on or according to the first optimal plan and the second optimal plan.

According to aspects of the disclosure, there is provided a method of operating a system onboard a vehicle, while the vehicle is travelling along a road surface. The method may include: receiving a preview of a road profile of a segment of the road ahead of the vehicle; separating a road surface profile into a first component including a range of frequencies below a first frequency and a second component including a range of frequencies above the first frequency; applying a first transfer function to the first component and a second transfer function, different than the first transfer function, to the second component; and controlling the system with a microprocessor-based controller based on the sum of the first component and the second component.

In some embodiments, the system may be an active suspension system actuator interposed between a portion of the sprung mass and an unsprung mass of the vehicle. In some embodiments, an output of the first transfer function may be a series of commands that cause the active suspension actuator to apply a tracking force to the portion of the sprung mass in a range of frequencies below the first frequency. In some embodiments, an output of the second transfer function may be a series of commands that cause the active suspension actuator to apply an isolating force to the portion of the sprung mass in a range of frequencies above the first frequency. In some embodiments, the method may include determining a value of the first frequency by minimizing a degree of force saturation of the active suspension actuator.

It should be appreciated that the foregoing concepts, and additional concepts discussed below, may be arranged in any suitable combination, as the present disclosure is not limited in this respect. Further, other advantages and novel features of the present disclosure will become apparent from the following detailed description of various nonlimiting embodiments when considered in conjunction with the accompanying figures.

BRIEF DESCRIPTION OF DRAWINGS

FIG. 1 illustrates a vehicle traveling along a road surface where a portion of the road ahead of the vehicle is a segment of length L.

FIG. 2 illustrates an exemplary embodiment of a vehicle control system onboard a vehicle that may include a controller and a planner.

FIG. 3 illustrates the degree of saturation of an exemplary command force profile as a function of time that may be provided to a system onboard a vehicle.

FIG. 4 illustrates the commanded force profile of Fig. 3 where the portions of the beyond the output limits of the system are clipped.

FIG. 5 illustrates an alternative exemplary strategy where the commanded force profile over a period of time may be scaled down so that the degree of saturation is eliminated.

FIG. 6 illustrates an alternative exemplary strategy where only the lower frequencies of the force the commanded force profile over a period of time are scaled down so that the degree of saturation is eliminated.

FIG. 7 illustrates a block diagram of an exemplary embodiment of a system that receives information about the road surface ahead of the vehicle including Road Profile Data separates the road profile data into low and high frequency components.

FIG. 8 illustrates an exemplary active suspension system interposed between a sprung mass and an unsprung mass.

FIG. 9 illustrates a block diagram of an exemplary embodiment of a planner that may operate in conjunction with a controller of an onboard vehicle system.

FIG. 10 illustrates a comparison of an actual desired force command and a saturated or clipped force that may be applied by an actuator over a period of time.

FIG. 11 illustrates an exemplary vehicle undergoing a constant pitch angular velocity.

FIG. 12 illustrates the exemplary vehicle of Fig. 11 where the front actuator experiences force saturation

DETAILED DESCRIPTION

In some embodiments, as a vehicle is traveling along a road, one or more controllers, e.g., microprocessor-based controllers, on-board the vehicle may receive road specific preview information or *a priori* information about the road or a portion of the road ahead of the vehicle. This information may be received from on-board or remote data-bases (e.g., remote data base(s) in the cloud). Such information may be used by the one or more microprocessor-based controllers to operate one or more systems (e.g., actuators, active suspension actuators) on-board the vehicle to react appropriately to one or more road conditions or interactions with certain aspects of a road. Road-specific preview information may include, for example, information about the road surface profile and/or road surface properties. As used herein, the term "road surface profile" refers to vertical excursions from the nominal road surface associated with features of a road surface. Such features may be naturally occurring or fabricated anomalies. They may be discrete (i.e., longitudinally on the same scale of a vehicle or smaller (including but not limited to potholes, bump, cracks, storm grates, expansion joints, frost heaves, etc.)) and/or distributed in which case they may extend for distances greater than the length of a vehicle (e.g., broken pavement or surface undulations). Interactions with aspects of a road surface profile of a road or a portion of a road may induce acceleration or other disturbance, e.g. accelerations in the vertical direction or with a vertical component. The induced accelerations may be accelerations of a vehicle or a portion of a vehicle (e.g., a vehicle body, vehicle chassis, a vehicle wheel, a sprung mass of the vehicle, or an unsprung mass of the vehicle, etc.) that may be induced while the vehicle is traveling along the surface of the road or a portion of the road. As used herein, the term "road surface properties" refers to properties of the road surface that may affect the traction of a vehicle tire, such as for example, surface roughness, surface composition (e.g., asphalt, concrete, gravel, dirt), or surface cover (e.g., ice, water, and or snow). However, other types of road-specific preview information are contemplated, as the disclosure is not so limited.

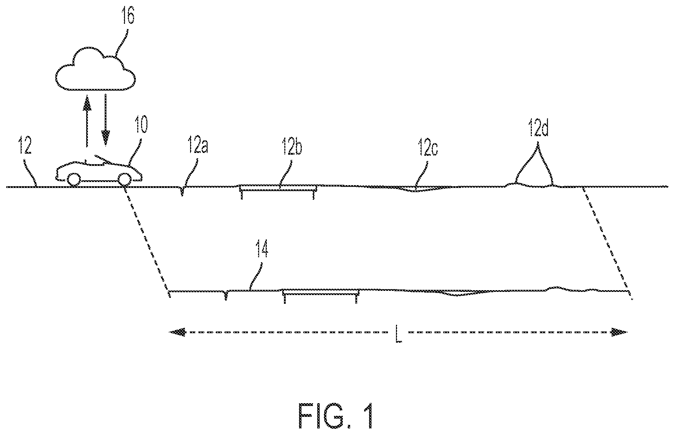

Fig. 1 illustrates vehicle **10** traveling along road surface **12**. A portion of the road, segment **14**, is of length L. In some embodiments, road-specific preview information about a road segment **14** may be received from a database, e.g., a database in cloud **16** and/or database onboard the vehicle (not shown in Fig. 1). The road segment **14** may include various aspects such as anomalies including but not limited to surface crack **12a**, manhole cover **12b**, pothole **12c**, and/or frost heaves **12d**. The vehicle **10** and/or one or more systems on-board vehicle **10** may be operated based on the information about the road segment **14** and/or information about the state of the vehicle **10**.

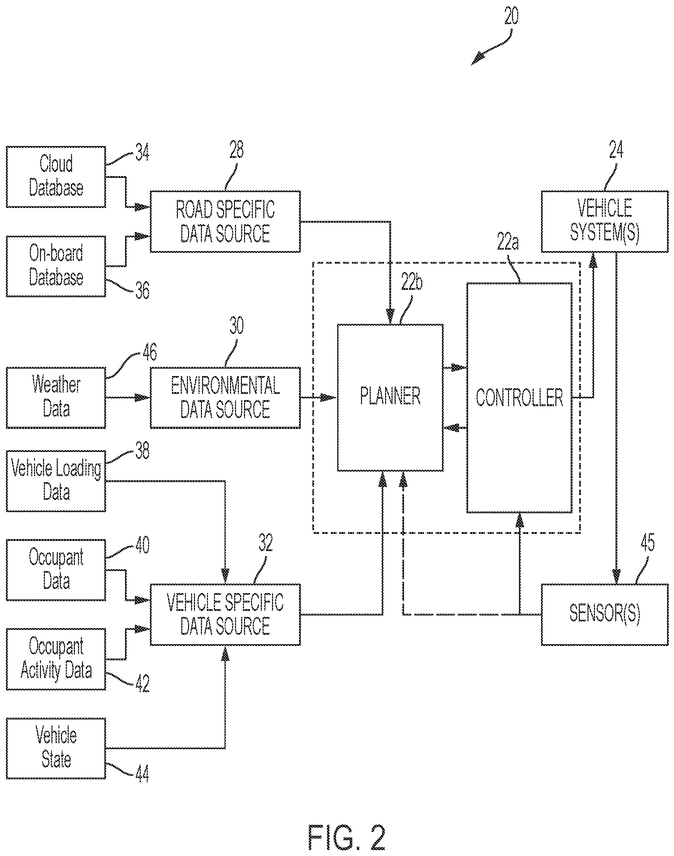

Fig. 2 illustrates an exemplary embodiment of a controller system **20** onboard vehicle **10** that may include a controller **22a** and planner **22b**. The controller **22a** and planner **22b** may include algorithms that, in some embodiments, may operate on a single microprocessor or multiple processors at the same cycle time. Alternatively, as described further below, in some embodiments the algorithms of controller **22a** and planner **22b** may operate on different processors at different cycle times. In some embodiments a planner may operate at a slower cycle time than a controller.

In some embodiments, controller **22a** may control one or more onboard systems **24** based on information received from the planner **22b** and/or sensors **45** (e.g., accelerometers, IMU, displacement censors, brake pressure sensors, steering angle sensors, etc.) which may be operatively attached to various portions of the vehicle (e.g., sprung mass or one or more unsprung masses associated with the vehicle). The input data received by the planner **22b**, may be received from, for example: a road-specific data source **28** (e.g., a remote cloud database **34** and/or an on-board vehicle data base **36**), an environmental data source **30** (e.g., weather data center **46**), and/or a vehicle specific data source **32** supplying (e.g., vehicle loading information **38**, occupant related data **40**, occupant activity data **42**, vehicle state information **44** (e.g., vehicle speed). In some embodiments the planner **22b** may make a plan that will be provided to the controller **22a** which the controller may implement or execute. In some embodiments, the planner may make a motion plan, which may be a vertical motion plan, that may be provided to and implemented by an active suspension actuator controller to control an aspect of the vertical motion of the vehicle sprung mass, e.g., the vehicle body. In some embodiments, the planner may provide the plan to the controller at a time selected by the planner. Alternatively, the controller may request a plan when needed; e.g., when the previous plan or a predetermine portion of the previous plan has been implemented.

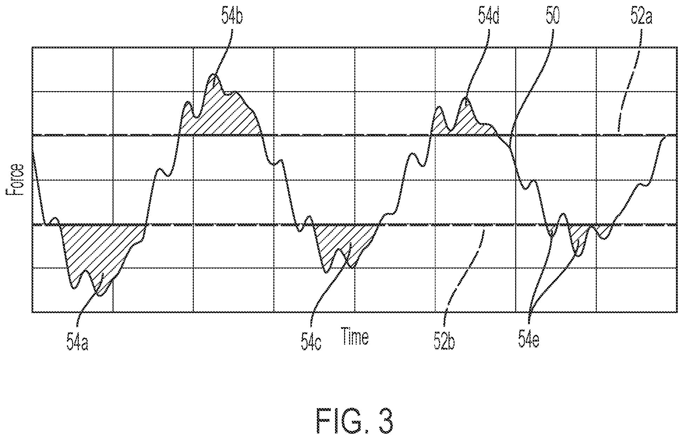

Inventors have recognized that, in some embodiments, under certain operating conditions, based on information about the road ahead of the vehicle, a controller configured to provide commands to a system, e.g., an active suspension actuator system, on-board a vehicle, may command the system to produce an output that is beyond the capacity of the system. For example, a controller may request or command an active suspension actuator system to produce a force output as a function of time represented by exemplary graph **50** in Fig. 3. In this example, lines **52a** and **52b** represent the force limits, in compression and extension, respectively. The cross-hatched areas represent desired or commanded force that a given actuator may be incapable of producing. It is noted the limits **52a** and **52b** are shown in Fig. 3 to represent force limits of equal magnitude, however unequal force limits are also contemplated, as the disclosure is not so limited. The greater the cross hatched areas **54a**-**54e** the greater the degree of saturation of the command force **50**. Force saturation occurs when the commanded force is greater than or outside the range of the force that a system, e.g. an actuator, can produce. As used herein, the term "degree of saturation" refers to the fraction of the integral of a force command vs. time curve, over a given period, that is outside a systems capacity or capability limits.

Although the graph **50** in Fig. 3 is shown to represent a requested or commanded force output as a function of time, similar curves may be generated to represent any other appropriate system output (e.g., torque or power). Therefore, the degree of saturation of other system outputs is also contemplated, as the disclosure is not so limited.

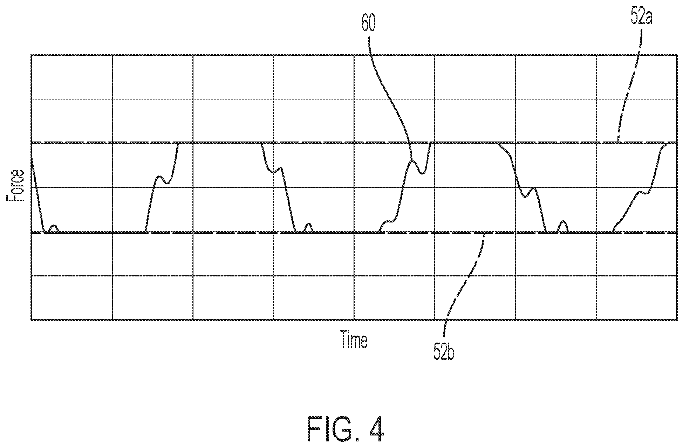

In embodiments where a controller requests or commands a system, e.g., an active suspension actuator (that is constrained by force limits **52a** and **52b**) to produce the force output **50** as a function of time, the actual force produced by, e.g., an actuator may be clipped periodically whenever the requested force exceeds the system's capacity. Such a clipped force output is illustrated in graph **60** in Fig. 4. Inventors have recognized that poor performance or other undesirable effects may result when a system, which is commanded by a controller to produce more output than it is capable of, reaches its maximum output threshold. For example, if an actuator system is commanded to produce the force represented by graph **50** but produces the clipped output shown in Fig. 4, or is alternatively commanded to produce the clipped output, the actuator may induce undesirable perceptible noise and/or vibration in the sprung mass, e.g., the vehicle body. In addition, a system, during periods when it is requested to produce an output that is greater than its maximum capacity, may be inefficient or difficult to control.

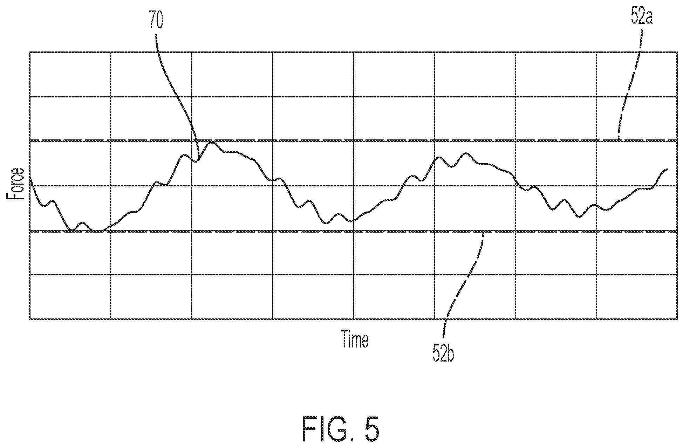

Fig. 5 illustrates an alternative strategy where the force command **70** over a period of time may be scaled down so that the system, e.g. an active suspension system, is not commanded, at any point in time, to produce an output that is beyond its capacity. However, this approach would reduce the output of a system during periods when the desired force may not exceed the limits of the system. Therefore, scaling the commanded output may unnecessarily derate the output of a system at times when there is spare capacity available.

Inventors have recognized that in some embodiments, under certain conditions, output may be commanded over a range of frequencies. Inventors have further recognized that in some embodiments, under certain operating conditions, the output in certain frequency ranges, e.g., lower frequencies, may place greater demands on a system than the output at other frequency ranges, e.g., higher frequencies.

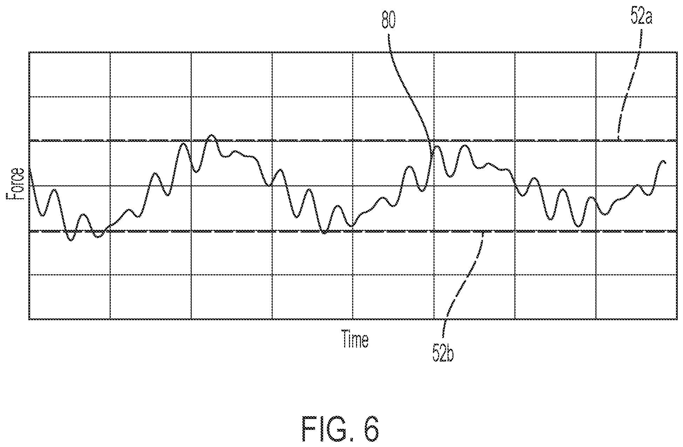

Fig. 6 illustrates an alternative strategy where, over a period of time, the lower frequencies of the force command **50** in Fig. 3 may be scaled down so that a vehicle system, e.g. the active suspension system, to produce the output force represented by curve **80**. In this exemplary embodiment, the system being controlled does not command force exceeding limits **52a** and **52b** is not commanded at any point during the period shown in Fig. 6. However, in the force command graph illustrated in Fig. 6, unlike the force command graph in Fig. 5, is not scaled down at the higher frequencies. With this strategy, the system may be fully effective at higher frequencies while the overall requested output does not exceed the threshold limits of the system because output at the lower frequencies is limited.

Inventors have recognized that separating the road profile based on frequency and responding to different frequencies ranges differently may avoid requesting or commanding systems, e.g., active suspension actuators to produce output (e.g. force, torque, power) that is above a threshold value while at the same time producing an acceptable level of isolation from road disturbances.

For example, in some embodiments the information about the road ahead of the vehicle may include the surface road profile of a portion of the road, e.g. vertical road displacement relative to a nominal value or vertical velocity. Inventors have recognized that the motion of a vehicle traveling over a road surface with the given road profile may be controlled such that the vertical motion of the vehicle body tracks the road profile at frequencies below a threshold frequency while the vehicle is isolated from motion at frequencies above the threshold value. In some embodiments, by selecting an appropriate transition frequency between tracking and isolation, demands on the active suspension actuators, as well as the degree of saturation, may also be reduced. In some embodiments this may be achieved by controlling the vertical motion of the vehicle or a portion of the vehicle such that the suspension system causes the vehicle body to track the road profile below a transition frequency while the vehicle body is isolated from disturbances frequencies higher than the transition frequency.

In some embodiments, the tracking-to-isolation transition frequency, may be selected by tuning the vehicle to achieve acceptable ride quality while avoiding commanding suspension system actuators to produce output, e.g., force, torque, power, that is greater than their capacity. As used herein the term "tracking-to-isolation transition frequency (TITF)" refers to the frequency above which a controller may operate one or more suspension system actuators to isolate from road disturbances but below which the controller may operate the suspension system so that the vehicle body tracks the road surface.

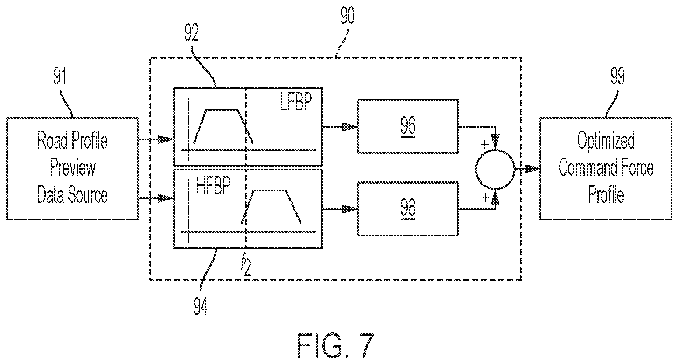

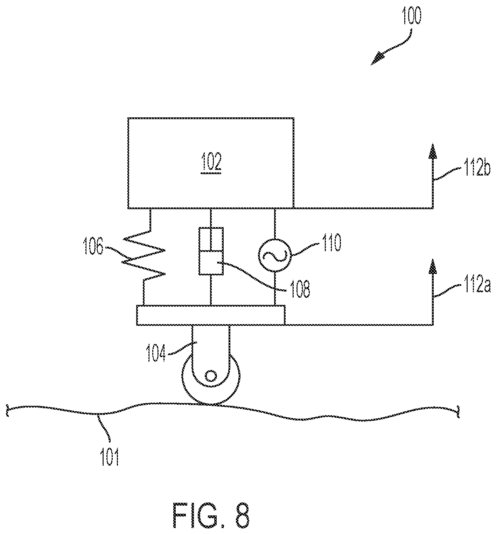

Fig. 7 illustrates a block diagram of an exemplary embodiment of a system **90** that receives information about the road surface ahead of the vehicle from a remote (e.g. cloud-based data base) or local (e.g. database onboard the vehicle) Road Profile Data Source **91**. System **90** separates the road profile data into low and high frequency components by using low frequency band pass (LFBP) filter **92**, e.g., a Butterworth filter, with an upper frequency limit $f_2$, and a high frequency band pass (HFBP) filter **94**, e.g. a Butterworth filter, with a lower frequency limit of $f2$. In the embodiment illustrated in Fig. 7, frequency $f_2$ may be the TITF of the system. For a particular active suspension actuator, the output of the LFBP filter is processed at block **96** to produce a tracking command (e.g. force command) while the output of the HFBP filter is processed at block **98** to produce an isolation command (e.g. force command). Fig. 8 illustrates an embodiment of an active suspension system **100** interposed between a sprung mass **102** and an unsprung mass **104**. The suspension system may include spring element **106**, a damping element **108** and active suspension actuator **110**. It should be noted that spring element **106** and/or the damping element **108** may be partially or fully integrated with actuator **110**. The controller for actuator **110** may be provided an optimized command force profile by the system **90** shown in Fig. 7. In some embodiments, the tracking portion of the force command produced at block **96** may be determined, based on a body reference that is equal to vertical road velocity, by using the following equation:

$$Force\ Command\ (Tracking) = Mass * Vertical\ Road\ Acceleration$$

where the Mass is equal to the sprung mass **102** supported or accelerated by the actuator **110**. In some embodiments, Vertical Road Acceleration may be approximated by using the vertical acceleration of mass **104**.

In some embodiments, the isolation portion of the force command for actuator **110** produced at block **98** may be determined, based on a body reference that is equal to zero velocity, by using the following equation:

$$Force\ Command\ (Isolation)$$
$$= -K * Vertical\ Road\ displacement - B * Vertical\ Road\ Velocity$$

where K is the spring constant of the spring element **106** parallel to the actuator and B is the magnitude of damping coefficient of damping element **108**. In some embodiments Vertical Road Velocity may be approximated by using the vertical velocity of mass **104**. In some embodiments, Vertical Road Velocity may be approximated by using the vertical velocity of mass 104, the actuator force 110, suspension travel 106, and it may be further extended to include other signals to improve the accuracy.

The outputs from blocks **96** and **98** may then be summed to produce an adjusted overall force command at block **99**. It is noted that any other appropriate band pass filter or equivalent (e.g., Besself filter, Chebyshev filter, elliptic filter, biquadratic IIR filter, and finite impulse response (FIR) filter) may also be used in block **92** and/or block **94**.

Parameters that may also be used to define the band pass filter combination in Fig. 7 may include the lower frequency limit (LML) of the filter in block **92** and the upper frequency limit (UFL) of the filter in block **94**.

Inventors have recognized that, in some embodiments, the values of these parameters may be determined during calibration of the system and maintained during subsequent use. Inventors have further recognized that the value of the TITF of the system **90** may also be selected during an initial tuning process and maintained during subsequent use.

However, inventors have also recognized that alternatively, the value of TITF may be initially selected during calibrating or tuning but subsequently adapted during use by using a planner **22b** such as illustrated in Fig. 2. For example, in some embodiments of Fig. 2, a planner may be used to select a TITF based on information from various sources, such as, for example, a road specific data source **28**, environmental data source **30** and/or vehicle specific data source. Once the optimal value of the TITF is selected, the planner may generate a trajectory plan for the vehicle, e.g., a vertical trajectory plan and provide that plan to controller **22a** to implement at each time step over a certain time period. As used herein, the term "vertical trajectory plan" refers to a series of commands provided to one or more controllers of a vehicle suspension system, e.g., active suspension system, to produce a desired motion, of the vehicle body or a portion of the vehicle body, in the vertical plane. In some embodiments, the planner **22b** may determine the optimal value of the TITF based on information, e.g. information about the road ahead of the vehicle, the environment of the vehicle, and/or the vehicle itself. For example, based on the information about the road segment ahead of the vehicle, the mass and speed of the vehicle, and the maximum force output of one or more actuators, the planner may determine an optimal TITF for maximum isolation of the vehicle body in heave, pitch and/or roll while traversing the given road segment. In some embodiments, the planner **22b** may optimize the TITF to minimize the area of the commanded force-time profile that surpasses the capacity of one or more actuators, e.g. the degree of force saturation. The planner **22b** may then generate a series of force commands and/or references for one or more suspension actuators and provide those commands to the controller. The controller may then request additional commands when the predetermined portion of the predetermined portion of the vertical trajectory plan has been implemented. Alternatively or additionally, the planner may deliver a new trajectory plan when it is ready.

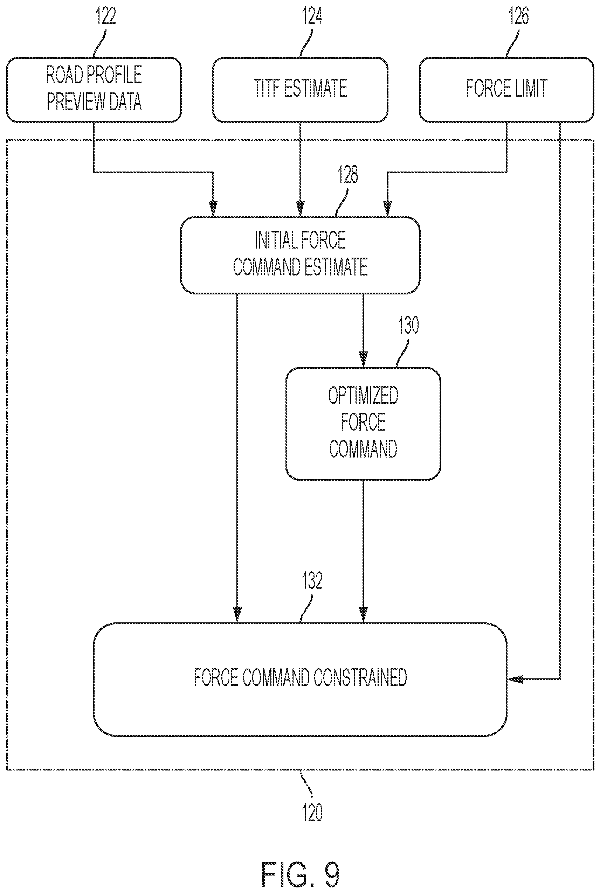

Fig. 9 illustrates a block diagram of an exemplary embodiment of a planner **120** that may work in conjunction with a controller (not shown in Fig. 9). Information received by planner **120** may include, but is not limited to, road profile data, for a road segment ahead of the vehicle, at block **122**, a TITF estimate at block **124**, and a force limit, for at least one actuator, at block **126**. At block **128**, an initial force command profile may be estimated for the road segment ahead of the vehicle. Based on this first estimate, an optimized force command may be determined at block **130**. In some embodiments, the optimization may include varying the TITF estimate, increasing or decreasing the value of the TITF until the integral of the force commands beyond the force limits of an actuator is minimized. At block **132**, the optimized force commands may be constrained to fall with the force limits of the actuator by, for example clipping or scaling the optimized force commands. In some embodiments, if it is determined that that the optimization process has not converged in time or has otherwise failed, at block **132**, the planner may revert back to the initial force command estimate determined at block **128**. Accordingly, at block **132**, the initial force commands may be constrained to fall within the force limits of the actuator by, for example clipping or scaling, the initial force commands.

In some embodiments, under certain operating conditions, a planner may be used to provide a controller, of a particular vehicle system, e.g., an active suspension actuator, a plan, e.g., a series of force commands to be applied by one or more actuators while the vehicle is traveling along a road segment. In some embodiments, a planner may provide the plan to the controller when the plan is ready. In some embodiments, a controller may request a new plan when it is needed. The command profile may be used to command an appropriate output as a function of time, by e.g., an active suspension actuator. The series of force commands may be configured to produce a desired vertical motion as the vehicle encounters the road profile provided to the planner. In some embodiments, a planner may operate over a much slower cycle time, e.g., a factor of 10 to 100 times slower, than the controller. The controller may provide a force plan that may be implement over many cycles of the controller.

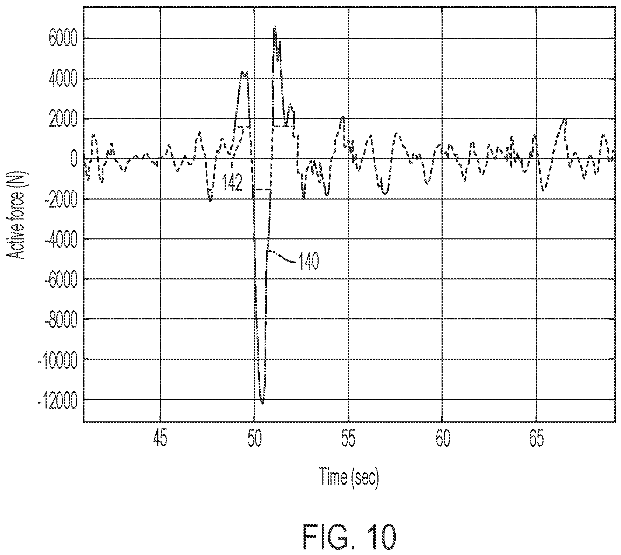

Fig. 10 illustrates a comparison of an actual desired force command **140** compared to a saturated or clipped force **142** that may be applied, over a period of 30 seconds, by an active suspension actuator with a maximum force capacity of 1500 N.

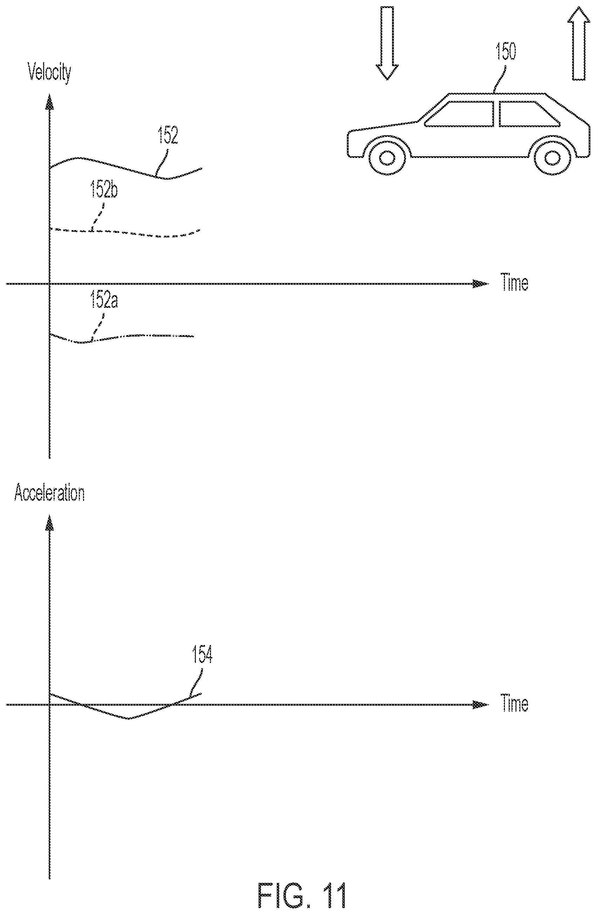

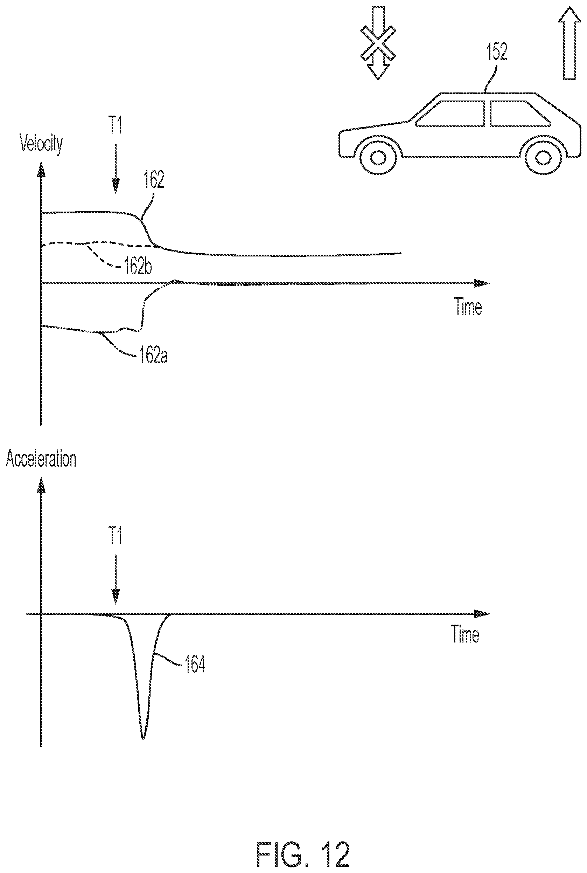

Fig. 11 illustrates an exemplary vehicle **150** undergoing a constant pitch angular velocity **152** and a near zero pitch angular acceleration **154**. Also shown in Fig. 11 are the linear velocity **152a** of the front of the vehicle and **152b** of the rear of the vehicle. Fig. 12 illustrates the exemplary vehicle **150** of Fig. 11 again undergoing a constant angular pitch velocity **162** and a near zero pitch acceleration **164** before time T1. Also shown in Fig. 12 are the linear velocity **162a** of the front of the vehicle and **162b** of the rear of the vehicle. In the operating condition illustrated in Fig. 12, the front actuator suddenly reaches its maximum output in compression at time T1. When this occurs, the linear velocity of the front of the vehicle may rapidly drop to zero, e.g., in a less than one second. As illustrated in Fig. 12, at time T1, the pitch acceleration may undergo a discontinuity which may produce unpleasant or objectionable vibration or noise that may be perceived by occupants of the vehicle.

Therefore, since the motion of a vehicle in the vertical plane may controlled by multiple active suspension actuators, in some embodiments multiple vertical trajectory planners may be used in a vehicle. In some embodiments, at least one planner may be associated with each controller which may be associated with an active suspension actuator. However, in some embodiments, a single vertical trajectory planner may be associated with multiple controllers and actuators.

The above-described embodiments of the technology described herein can be implemented in any of numerous ways. For example, the embodiments may be implemented using hardware, software or a combination thereof. When implemented in software, the software code can be executed on any suitable processor or collection of processors, whether provided in a single computer or distributed among multiple computers. Such processors may be implemented as integrated circuits, with one or more processors in an integrated circuit component, including commercially available integrated circuit components known in the art by names such as CPU chips, GPU chips, microprocessor, microcontroller, or co-processor. Alternatively, a processor may be implemented in custom circuitry, such as an ASIC, or semicustom circuitry resulting from configuring a programmable logic device. As yet a further alternative, a processor may be a portion of a larger circuit or semiconductor device, whether commercially available, semi-custom or custom. As a specific example, some commercially available microprocessors have multiple cores such that one or a subset of those cores may constitute a processor. Though, a processor may be implemented using circuitry in any suitable format.

Further, it should be appreciated that a computer may be embodied in any of a number of forms, such as a rack-mounted computer, a desktop computer, a laptop computer, or a tablet computer. Additionally, a computer may be embedded in a device not generally regarded as a computer but with suitable processing capabilities, including a Personal Digital Assistant (PDA), a smart phone or any other suitable portable or fixed electronic device.

Also, a computer may have one or more input and output devices. These devices can be used, among other things, to present a user interface. Examples of output devices that can be used to provide a user interface include printers or display screens for visual presentation of output and speakers or other sound generating devices for audible presentation of output. Examples of input devices that can be used for a user interface include keyboards, and pointing devices, such as mice, touch pads, and digitizing tablets. As another example, a computer may receive input information through speech recognition or in other audible format.

Such computers may be interconnected by one or more networks in any suitable form, including as a local area network or a wide area network, such as an enterprise network or the Internet. Such networks may be based on any suitable technology and may operate according to any suitable protocol and may include wireless networks, wired networks or fiber optic networks.

Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine.

In this respect, the embodiments described herein may be embodied as a computer readable storage medium (or multiple computer readable media) (e.g., a computer memory, one or more floppy discs, compact discs (CD), optical discs, digital video disks (DVD), magnetic tapes, flash memories, circuit configurations in Field Programmable Gate Arrays or other semiconductor devices, or other tangible computer storage medium) encoded with one or more programs that, when executed on one or more computers or other processors, perform methods that implement the various embodiments discussed above. As is apparent from the foregoing examples, a computer readable storage medium may retain information for a sufficient time to provide computer-executable instructions in a non-transitory form. Such a computer readable storage medium or media can be transportable, such that the program or programs stored thereon can be loaded onto one or more different computers or other processors to implement various aspects of the present disclosure as discussed above. As used herein, the term "computer-readable storage medium" encompasses only a non-transitory computer-readable medium that can be considered to be a manufacture (i.e., article of manufacture) or a machine. Alternatively or additionally, the disclosure may be embodied as a computer readable medium other than a computer-readable storage medium, such as a propagating signal.

The terms "program" or "software" are used herein in a generic sense to refer to any type of computer code or set of computer-executable instructions that can be employed to program a computer or other processor to implement various aspects of the present disclosure as discussed above. Additionally, it should be appreciated that according to one aspect of this embodiment, one or more computer programs that when executed perform methods of the present disclosure need not reside on a single computer or processor, but may be distributed in a modular fashion amongst a number of different computers or processors to implement various aspects of the present disclosure.

Computer-executable instructions may be in many forms, such as program modules, executed by one or more computers or other devices. Generally, program modules include routines, programs, objects, components, data structures, etc. that perform particular tasks or implement particular abstract data types. Typically the functionality of the program modules may be combined or distributed as desired in various embodiments.

Also, data structures may be stored in computer-readable media in any suitable form. For simplicity of illustration, data structures may be shown to have fields that are related through location in the data structure. Such relationships may likewise be achieved by assigning storage for the fields with locations in a computer-readable medium that conveys relationship between the fields. However, any suitable mechanism may be used to establish a relationship between information in fields of a data structure, including through the use of pointers, tags or other mechanisms that establish relationship between data elements.

Various aspects of the present disclosure may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments.

Also, the embodiments described herein may be embodied as a method, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Further, some actions are described as taken by a "user." It should be appreciated that a "user" need not be a single individual, and that in some embodiments, actions attributable to a "user" may be performed by a team of individuals and/or an individual in combination with computer-assisted tools or other mechanisms.

While the present teachings have been described in conjunction with various embodiments and examples, it is not intended that the present teachings be limited to such embodiments or examples. On the contrary, the present teachings encompass various alternatives, modifications, and equivalents, as will be appreciated by those of skill in the art. Accordingly, the foregoing description and drawings are by way of example only.

Further preferred embodiments of the present invention are E1-E38 as follows:

E1. A method of operating a system onboard a vehicle while the vehicle is travelling along a road surface, the method comprising:

receiving, at a microprocessor in the vehicle, road surface profile data associated with the road surface ahead of the vehicle;

filtering the road surface profile data with a lower frequency band pass filter to produce a first filtered output, wherein the lower frequency band pass filter has a first

lower frequency limit equal to a first frequency and a first upper frequency limit equal to a second frequency;

supplying the first filtered output to a lower frequency transfer function to produce a lower frequency command signal;

filtering the road surface profile data with a higher frequency band pass filter to produce a second filtered output, wherein the higher frequency band pass filter has second lower frequency limit equal to the second frequency and a second upper frequency limit equal to a third frequency, wherein the higher frequency band filter operates in parallel with the lower frequency band pass filter;

supplying the second filtered output to a higher frequency transfer function to produce a higher frequency command signal;

determining a total command signal based on the lower frequency command signal and the higher frequency command signal; and

operating the system based at least partly on the total command signal.

E2. The method of embodiment E1, wherein the first frequency may be in a range of frequencies that are greater than or equal to 0.3 Hz and less than or equal to 0.8 Hz.

E3. A method as in any one of embodiments E1-E2, wherein the third frequency is in a range of range of frequencies that are greater than or equal to 8 Hz and less than or equal to 0.8 12 Hz.

E4. A method as in any one of embodiments E1-E3, wherein the first frequency and the third are predetermined.

E5. A method as in any one of embodiments E1-E4, wherein the data is received at a microprocessor in the vehicle from a source selected from the group consisting of a remote data base, a database in the cloud, a local database located in the vehicle.

E6. A method as in any one of embodiments E1-E5, wherein the first lower frequency limit is determined at the lower -3 dB point of the lower frequency band pass filter and the first upper frequency limit is determined at the upper -3 dB point of the lower frequency band pass filter.

E7. A method as in any one of embodiments E1-E6, wherein the second lower frequency limit is determined at the lower -3 dB point of the higher frequency band pass filter and the second upper frequency limit is determined at the upper -3 dB point of the higher frequency band pass filter.

E8. A method as in any one of embodiments E1-E7, wherein the system is an active suspension actuator.

E9. The method of embodiment E8, further comprising controlling the active suspension with an active suspension controller.

E10. A method as in any one of embodiments E1-E9, wherein the lower frequency command signal causes a portion of the vehicle to track at least a first vertical motion of the road.

E11. A method as in any one of embodiments E1-E10, wherein the higher frequency command signal causes a portion of the vehicle to be isolated from at least a vertical motion of the road.

E12. A method as in any one of embodiments E1-E11, wherein the total command signal is determined by summing the lower frequency command signal and the higher frequency command signal.

E13. The method of embodiment E10, wherein the lower frequency command signal is a first series of force commands.

E14. The method of embodiment E11, wherein the higher frequency command signal is a second series of force commands.

E15. The method of embodiment E9, further comprising determining the second frequency while the vehicle is travelling along the road surface.

E16. The method of embodiment E15, further comprising operating a vertical motion planner to optimize a cost function associated with the active suspension actuator.

E17. The method of embodiment E16, wherein the optimizing the cost function includes minimizing the degree to which the total command signal includes commands that are beyond the ability of the active suspension actuator to implement.

E18. A method as in any one of embodiments E16-E17, wherein the vertical motion planner operates at a first a cycle time and the controller operates at a second faster cycle time.

E19. The method of embodiment E18, wherein the first cycle time of is in a range of cycle times that is greater than equal or equal to 0.1 seconds to less than or equal to 1 second.

E20. A method as in any one of embodiment E18-E19, wherein the second cycle time is in a range of cycle times that is greater than or equal to 0.0005 seconds to less than or equal to 0.02 seconds.

E21. A method of operating a vehicle while travelling along a road surface, the method comprising:

   (a) after a start of a first period of a given duration, operating a vehicle system according to a first motion plan, with a controller that includes a microprocessor operating at a first cycle time, wherein the motion plan is prepared, prior to the start of the first period, with a motion planner microprocessor operating at a second cycle time;

(b) during step (a), collecting data associated with a motion of the vehicle with at least one sensor onboard the vehicle; and

(c) prior to an end of the first time period, operating the vehicle system with the controller, according to a second motion plan prepared by the motion planner;

wherein the value of at least one vehicle system parameter during the transition from the first plan to the second plan is determined, at least partially, based on the data collected during step (b).

E22. The method of embodiment E21, wherein the first cycle time is in a range of greater than equal to 50 Hz to less than or equal to 2000 Hz.

E23. A method as in any one of embodiments E21-E22, wherein the second cycle time is in a range of greater than equal to 2 Hz to less than or equal to 20 Hz.

E24. A method as in any one of embodiments E21-E23, vehicle system is an active suspension system.

E25. A method as in any one of embodiments E21-E24, wherein the motion plan is a vertical motion plan that is at least partially based on a road profile of a segment of the road that is ahead of the vehicle prior to the start of the first period.

E26. The method of embodiment E25, wherein the first vertical motion plan includes a first plan for vehicle motion in a first range of frequencies above a first frequency and a second plan for vehicle motion in a second range of frequencies below the first frequency.

E27. The method of embodiment E26, wherein the first frequency is determined by the motion planner based at least partially on a road profile of the segment of the road that is ahead of the vehicle prior to the start of the first period.

E28. A method as in any one of embodiments E25-E27, wherein information about the road profile of the segment of the road is received at the vehicle from a database in the cloud.

E29. A method of operating a vehicle while travelling along a road surface wherein the vehicle includes a vertical motion planner and a vertical motion controller, the method comprising:

receiving, at the vertical motion planner, road surface profile data for a road segment ahead of the vehicle;

based on the road surface profile and for a range of frequencies above a first frequency, using the vertical motion planner to develop a first vertical force profile for at least one actuator of an active suspension system, wherein the first vertical force profile is configured to isolate at least a portion of the vehicle from road surface disturbances, while the vehicle is traveling along the road segment;

based on the road surface profile and for a range of frequencies below the first frequency, using the vertical motion planner to develop a second vertical force profile for the at least one actuator of the active suspension system, wherein the second vertical force profile is configured to cause the motion of at least the portion of the vehicle to track the road surface profile, while the vehicle is traveling along the road segment;

providing an overall force profile to the controller, wherein the overall force profile is a combination of the first force profile and the second force profile; and

operating the at least one actuator to apply a force on at least the portion of the vehicle according to the overall force profile while the vehicle is traveling along the road segment.

E30. The method of embodiment E29, wherein the first force profile and/or the second force profile are at least partially based on a state parameter of the vehicle.

E31. A method as in any one of embodiments E29-E30, further comprising minimizing a cost function associated with the actuator by modifying the first frequency.

E32. A method as in any one of embodiments E29-E31, wherein the cost function is based on a parameter selected from the group consisting of an amount of force saturation, an amount of range of travel saturation, and the value of the first frequency.

E33. A controller system of an actuator of an active suspension system, comprising:

a microprocessor-based vertical motion planner configured to develop a first optimal motion plan for a vehicle for frequencies in a range below a first frequency and a second optimal motion plan, different than the first optimal motion plan, for frequencies above the first frequency, wherein the first and second optimal motion plan are at least partially based on a road motion profile for a segment of the road ahead of the vehicle; and,

a microprocessor-based controller, wherein the controller is configured to control a vertical motion of a vehicle with an active suspension controller based on the first optimal plan and the second optimal plan.

E34. A method of operating a system onboard a vehicle while the vehicle is travelling along a road surface, the method comprising:

receiving a preview of a road surface profile of a segment of the road ahead of the vehicle;

separating a road profile into a first component including a range of frequencies below a first frequency and a second component including a range of frequencies above the first frequency;

applying a first transfer function to the first component and a second transfer function, different than the first transfer function, to the second component; and

controlling the system with a microprocessor-based controller based on the sum of the first component and the second component.

E35. The method of embodiment E34, wherein the system is an active suspension system actuator interposed between a portion of the sprung mass and an unsprung mass of the vehicle.

E36. The method of embodiment E35, wherein an output of the first transfer function is a series of commands that cause the active suspension actuator to apply a tracking force to the portion of the sprung mass in a range of frequencies below the first frequency.

E37. The method of embodiment E36, wherein an output of the second transfer function is a series of commands that cause the active suspension actuator to apply an isolating force to the portion of the sprung mass in a range of frequencies above the first frequency.

E38. The method of embodiment E36, further comprising determining a value of the first frequency by minimizing a degree of force saturation of the active suspension actuator.


**Claims**

1. A method of operating a vehicle while travelling along a road surface, the method comprising:

(a) after a start of a first period of a given duration, operating a vehicle system according to a first motion plan, with a controller that includes a microprocessor operating at a first cycle time, wherein the motion plan is prepared, prior to the start of the first period, with a motion planner microprocessor operating at a second cycle time;
(b) during step (a), collecting data associated with a motion of the vehicle with at least one sensor onboard the vehicle; and
(c) prior to an end of the first time period, operating the vehicle system with the controller, according to a second motion plan prepared by the motion planner;

wherein the value of at least one vehicle system parameter during the transition from the first plan to the second plan is determined, at least partially, based on the data collected during step (b).

2. The method of claim 1, wherein the first cycle time is in a range of greater than equal to 50 Hz to less than or equal to 2000 Hz.

3. A method as in any one of claims 1-2, wherein the second cycle time is in a range of greater than equal to 2 Hz to less than or equal to 20 Hz.

4. A method as in any one of claims 1-3, vehicle system is an active suspension system.

5. A method as in any one of claims 1-4, wherein the motion plan is a vertical motion plan that is at least partially based on a road profile of a segment of the road that is ahead of the vehicle prior to the start of the first period.

6. The method of claim 5, wherein the first vertical motion plan includes a first plan for vehicle motion in a first range of frequencies above a first frequency and a second plan for vehicle motion in a second range of frequencies below the first frequency.

7. The method of claim 6, wherein the first frequency is determined by the motion planner based at least partially on a road profile of the segment of the road that is ahead of the vehicle prior to the start of the first period.

8. A method as in any one of claims 5-7, wherein information about the road profile of the segment of the road is received at the vehicle from a database in the cloud.

9. A method of operating a vehicle while travelling along a road surface wherein the vehicle includes a vertical motion planner and a vertical motion controller, the method comprising:

> receiving, at the vertical motion planner, road surface profile data for a road segment ahead of the vehicle;
> based on the road surface profile and for a range of frequencies above a first frequency, using the vertical motion planner to develop a first vertical force profile for at least one actuator of an active suspension system, wherein the first vertical force profile is configured to isolate at least a portion of the vehicle from road surface disturbances, while the vehicle is traveling along the road segment;
> based on the road surface profile and for a range of frequencies below the first frequency, using the vertical motion planner to develop a second vertical force profile for the at least one actuator of the active suspension system, wherein the second vertical force profile is configured to cause the motion of at least the portion of the vehicle to track the road surface profile, while the vehicle is traveling along the road segment;
> providing an overall force profile to the controller, wherein the overall force profile is a combination of the first force profile and the second force profile; and
> operating the at least one actuator to apply a force on at least the portion of the vehicle according to the overall force profile while the vehicle is traveling along the road segment.

10. The method of claim 9, wherein the first force profile and/or the second force profile are at least partially based on a state parameter of the vehicle.

11. A method as in any one of claims 9-10, further comprising minimizing a cost function associated with the actuator by modifying the first frequency.

12. A method as in any one of claims 9-11, wherein the cost function is based on a parameter selected from the group consisting of an amount of force saturation, an amount of range of travel saturation, and the value of the first frequency.

13. A controller system of an actuator of an active suspension system, comprising:

> a microprocessor-based vertical motion planner configured to develop a first optimal motion plan for a vehicle for frequencies in a range below a first frequency and a second optimal motion plan, different than the first optimal motion plan, for frequencies above the first frequency, wherein the first and second optimal motion plan are at least partially based on a road motion profile for a segment of the road ahead of the vehicle; and,
> a microprocessor-based controller, wherein the controller is configured to control a vertical motion of a vehicle with an active suspension controller based on the first optimal plan and the second optimal plan.

FIG. 1

FIG. 2

FIG. 3

FIG. 4

FIG. 5

FIG. 6

FIG. 7

FIG. 8

FIG. 9

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63297873